# EUROPEAN PATENT SPECIFICATION

(11) **EP 0 628 342 B1**
(45) Date of publication and mention of the grant of the patent: **11.12.1996**
(21) Application number: 94850087.1
(22) Date of filing: 18.05.1994
(51) Int. Cl.: B01D 53/34, B01D 53/50

(54) **Method and apparatus for cleaning gas containing sulphur dioxide**
Verfahren und Vorrichtung zum Reinigen von SO2-haltigen Gasen
Procédé et installation de purification des gaz contenant du SO2

(30) Priority: 08.06.1993 SE 9301946
(43) Date of publication of application: 14.12.1994
(73) Proprietor: ABB FLÄKT AB, S-120 86 Stockholm (SE)
(72) Inventor: Ragnarsson, Sven, S-360 44 Ingelstad (SE)
(74) Representative: Wiklund, Erik

(56) References cited:
- DE-C- 4 012 320
- US-A- 4 331 640

## Description

This invention relates to a method and an apparatus for cleaning gas containing sulphur dioxide, as defined in the preambles to appended claims 1 and 7, respectively. To be more specific, the invention aims at restricting the sulphate content of the wastewater resulting from such cleaning of sulphur-dioxide-containing gas.

An increasing number of countries are adopting tougher regulations on the amount of impurities permissible in wastewater, e.g. as regards the sulphate content. For instance, both Swedish and Dutch law provides that the sulphate content of wastewater must not exceed 300 mg/l.

When cleaning sulphur-dioxide-containing gases, such as flue gases from oil-fired power stations, coal-fired power stations, and refuse incineration plants, the sulphur dioxide is absorbed in a washing liquid containing lime (e.g. calcium carbonate or slaked lime). By reacting with the lime, the sulphur dioxide is separated, chiefly in the form of calcium sulphate (gypsum). Even though most of the absorbed sulphur dioxide is thus removed as a solid material (gypsum), the washing liquid retains a high sulphate content of about 3,000-10,000 mg/l. Before the washing liquid can be discharged into the sewage system, it must be cleaned in order to reduce its content of sulphate, which is done in a special treatment plant. Such cleaning not-withstanding, the sulphate content is merely reduced to the saturation value of calcium sulphate, which is about 1500 mg/l, and the above-mentioned provision for a maximum sulphate content of wastewater of 300 mg/l is thus not met.

Use is also made of the so-called dual salt technique, which primarily serves to clean flue gases from refuse incineration plants, which contain hydrogen chloride as well as sulphur dioxide. According to this technique, the flue gases are cleaned in a two-stage scrubber, where hydrogen chloride is separated in the first stage and sulphur dioxide is separated in the second stage. The acid washing liquid from the first stage is neutralised by means of lime, whereupon heavy metal impurities are separated, such that the washing liquid then chiefly contains calcium chloride. In the second stage, the washing liquid is more alkaline and contains sodium hydroxide, and will thus come to contain sodium sulphate on the absorption of sulphur dioxide. The washing liquid from the second stage is mixed with the calcium-chloride-containing washing liquid from the first stage, calcium sulphate (gypsum) being precipitated. The separation of the gypsum precipitate results in wastewater saturated with calcium sulphate, i.e. containing about 1500 mg sulphate/l. Neither this method meets the provision for a maximum sulphate content of wastewater of 300 mg/l.

If the sulphate conten of the wastewater is to be reduced to a maximum of 300 mg/l in the above prior-art technique, this may at present be achieved only by diluting the wastewater with clean water. However, this does not constitute a cleaning method and does not actually reduce the total amount of sulphate. The addition of clean water also leads to an increase in costs.

According to the present invention, it has now been found that it is possible, by specially-devised regeneration of the washing liquid in the cleaning of sulphurdioxide-containing gases, such as flue gases, to reduce the sulphate content of wastewater from the regeneration to below 300 mg/l. To be more specific, the sulphate content is reduced by some of the washing liquid to be drained off as wastewater being first cooled for the precipitation and separation of sodium sulphate and then subjected to the precipitation and separation of more sulphate in the form of calcium sulphate, whereupon the thus-treated washing liquid may be discharged as wastewater, having a sulphate content below 300 mg/l.

As will be described in the following, the invention can be used for cleaning gases containing only sulphur dioxide or for cleaning gases containing both sulphur dioxide and hydrogen chloride, in which case further advantages are achieved.

The invention thus provides a method for cleaning sulphur-dioxide-containing gas, such as flue gas, wherein the gas is treated in a gas scrubber for the absorption of sulphur dioxide in an aqueous sodium-based washing liquid circulating in a primary circuit whence a partial flow is drawn off to a secondary circuit to be regenerated by adding a calcium-ion source for the precipitation and removal of calcium sulphate and then adding a carbonate-ion source for the precipitation and removal of calcium carbonate, whereupon the partial flow of regenerated washing liquid is recycled to the primary circuit, said method being characterised by drawing off from the secondary circuit a partial amount of washing liquid to a cooling circuit where it is brought to a temperature below about 30°C for the precipitation and separation of sodium sulphate, and then adding to the partial amount of washing liquid a calcium-ion source for the precipitation and removal of calcium sulphate, whereupon the partial amount of washing liquid thus freed of precipitated material is drawn off.

The invention also provides an apparatus for cleaning sulphur-dioxide-containing gas, such as flue gas, the device comprising a gas scrubber including at least one stage which comprises a primary circuit having means for circulating an aqueous sodium-based washing liquid in contact with the gas, a conduit for drawing off a partial flow of washing liquid to a secondary circuit which has means for supplying a calcium-ion source and separating precipitated calcium sulphate, and means for supplying a carbonate-ion source and separating precipitated calcium carbonate as well as recycling regenerated washing liquid to the primary circuit, said apparatus being characterised by a conduit from the secondary circuit to a cooling circuit having a cooling means for cooling a partial amount of washing liquid from the secondary circuit and precipitating sodium sulphate, means for separating and recycling precipitated sodium sulphate to the secondary circuit, means for supplying a calcium-ion source to the remaining partial amount and precipitating calcium sulphate, means for recycling the precipitated calcium sulphate to the secondary circuit, and means for drawing off the partial amount of washing liquid thus freed of precipitated sodium sulphate and calcium sulphate.

Further distinctive features and advantages of the invention will appear from the following description and the appended claims.

For clarifying purposes, the invention will now be described with reference to the accompanying drawings, in which
Fig. 1 illustrates an apparatus for cleaning gas containing sulphur-dioxide only, and
Fig. 2 illustrates an apparatus for cleaning gas containing sulphur dioxide as well as hydrogen chloride.

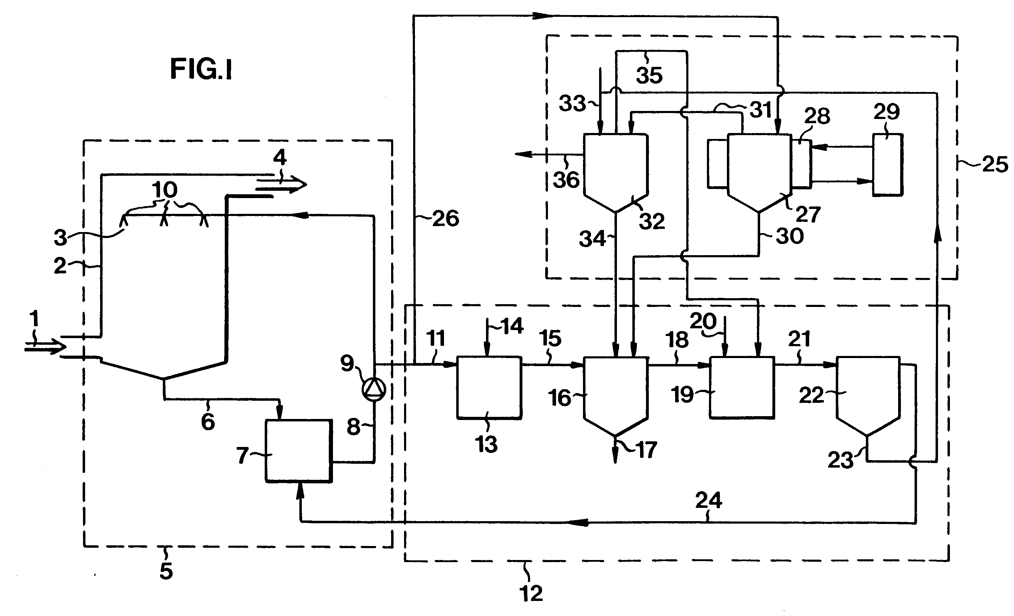

As shown in Fig. 1, sulphur-dioxide-containing gas 1, such as flue gas from a coal-fired power station, is introduced into a scrubber 2, where it is contacted with finely-divided washing liquid 3 which absorbs the sulphur dioxide before the cleaned gas 4 leaves the scrubber. The washing liquid 3 consists of an aqueous, sodium-based alkaline solution which absorbs sulphur dioxide from the gas and then, while circulating in a primary circuit 5 (indicated by dashed lines), is collected and drawn off from the scrubber 2 through a conduit 6 to a collecting tank 7. As a result of the absorption of sulphur dioxide, the washing liquid will chiefly contain sulphate ions. Washing liquid is drawn off from the collecting tank 7 through a conduit 8 and conveyed by means of a circulating pump 9 back to the scrubber 2, into which it is injected through nozzles 10. As the washing liquid absorbs more sulphur dioxide from the gas 1, the sulphate content of the washing liquid increases. To enable efficient absorption of sulphur dioxide from the gas 1, the washing liquid has to be regenerated. This is done by drawing off a partial flow of washing liquid from the primary circuit 5 and conducting this partial flow through a conduit 11 to a secondary circuit 12 (indicated by dashed lines in Fig. 1) for regeneration. Regeneration is performed by precipitating the absorbed sulphur dioxide, which is present in the form of sulphate ions in the washing liquid, as calcium sulphate (gypsum). Thus, the washing liquid is first fed to a tank 13 to which a calcium-ion source 14 is added. Conveniently, the calcium-ion source consists of lime, such as calcium carbonate (CaCO₃) or slaked lime (Ca(OH)₂). Then, the washing liquid is conducted through a conduit 15 to a precipitation tank 16 for the precipitation of calcium sulphate, which sediments and can be recovered as gypsum sludge 17 via an outlet at the bottom of the tank. Although the gypsum sludge may be deposited, it is preferably used for making e.g. gypsum boards. If the gypsum sludge is to be of use, it should contain a minimum amount of impurities. After the precipitation and separation of calcium sulphate, the washing liquid is conducted through a conduit 18 to a tank 19 for the precipitation of calcium ions in the form of sparingly-soluble calcium carbonate. This is done by adding a carbonate-ion source 20, such as soda (Na₂CO₃) or carbon dioxide (CO₂) to the washing liquid. Then, the washing liquid is conducted through a conduit 21 to a precipitation tank 22 for the precipitation and sedimentation of calcium carbonate. The sedimented calcium carbonate is recovered as sludge at the bottom of the tank through a conduit 23. The regenerated washing liquid, thus freed of the sulphur dioxide absorbed in the form of sulphate, is then recycled to the collecting tank 7 from the precipitation tank 22 via a conduit 24.

Thus far, the inventive method is previously known, and reference is made to US-A-3,873,532 for further details. The process is known as the indirect lime process and has been developed with a view to cleaning gases only containing sulphur dioxide, such as flue gases resulting from the burning of coal. According to the prior-art technique, the sedimented calcium carbonate sludge is recycled from the conduit 23 in the secondary circuit to the container 13. Further, there is a drain from the conduit 24 but, as pointed out in the foregoing, the sulphate content of the drained washing liquid exceeds 300 mg/l and thus cannot be discharged into the sewage system without additional cleaning. A further drawback of the prior-art technique is that the recycling of the precipitated calcium carbonate sludge in the secondary circuit from the precipitation tank 22 to the tank 13 leads to contamination of the gypsum that is precipitated and recovered at 17. Gypsum contaminated with calcium carbonate is of less commercial value and may, in some cases, have to be deposited instead of being marketed as a useful product.

In order to obviate the above-mentioned drawbacks, the so-called indirect lime method has been modified in the present invention by connecting a cooling circuit 25 (indicated by dashed lines in Fig. 1) to the secondary circuit 12. In the cooling circuit 25, the washing liquid destined to be drawn off from the secondary circuit is subjected to special treatment for reducing its sulphate content before it is discharged into the sewage system or put to some use.

As appears from Fig. 1, the partial amount of washing liquid to be treated in the cooling circuit is drawn off from the secondary circuit. Preferably, this partial amount is drawn off early in the secondary circuit from the conduit 11 in order that it should have a minimum pH value. The drawn-off partial amount of washing liquid is conducted through a conduit 26 to a cooling tank 27, where it is brought to a temperature below about 30°C. Preferably, the washing liquid is cooled to a temperature below about 5°C. The liquid is cooled in any suitable way, preferably by means of a cooling jacket 28 which is provided on the cooling tank 27 and in which a cooling medium circulates. It is preferred that cooling is performed by means of a heat pump 29. When the washing liquid is cooled in the cooling tank 27, sodium sulphate is precipitated in the form of Glauber's salt, which is removed from the cooling tank 27 and recycled to the secondary circuit 12, preferably to the precipitation tank 16. Thus, the sodium contents of the washing liquid are recovered, while at the same time the sulphate content is reduced. From the cooling tank 27, the treated partial amount of washing liquid is fed through a conduit 31 to a tank 32 for the precipitation and removal of more sulphate. To this end, a calcium-ion source 33 is added to the liquid, such that these calcium ions and the sulphate ions in the liquid form calcium sulphate (gypsum), which is precipitated and then removed from the tank 32 via a conduit 34 in order to be recycled to the secondary circuit 12, preferably to the precipitation tank 16 where calcium sulphate is precipitated in the secondary circuit.

As the calcium-ion source 33, use can be made of a calcium compound, such as calcium chloride, calcium carbonate or calcium hydroxide, taken from a suitable supply (not shown) of the calcium-ion source. However, it is highly preferred to use, as the calcium-ion source in the invention, the calcium carbonate that is precipitated and collected in the precipitation tank 22 in the secondary circuit 12. When using this calcium carbonate as the calcium-ion source, the calcium carbonate sludge is conducted through the conduit 23 from the precipitation tank 22 to the tank 32, as shown in the drawing. Two advantages are achieved by such an arrangement: the calcium carbonate sludge from the precipitation tank 22 is utilised in the reduction of the sulphate content of the partial amount treated in the cooling circuit 25, and the recycling of the calcium carbonate sludge from the precipitation tank 22 to the tank 13 in the secondary circuit is avoided, thereby avoiding undesirable contamination of the gypsum sludge 17 with calcium carbonate. Using the calcium carbonate sludge in the invention as described makes it possible to obtain, from the gypsum sludge 17, gypsum that has a calcium carbonate content below 1% by weight.

In order to facilitate the dissolution of the calcium-ion source 33, e.g. in the form of calcium carbonate sludge from the precipitation tank 22, the solution is acidified, if need be. The dissolution of the calcium carbonate added to the tank 32 results in the formation of calcium ions, as well as carbon dioxide which leaves through a conduit 35 and preferably is recycled to the secondary circuit 2 and the tank 19 to be added thereto as a carbonate-ion source.

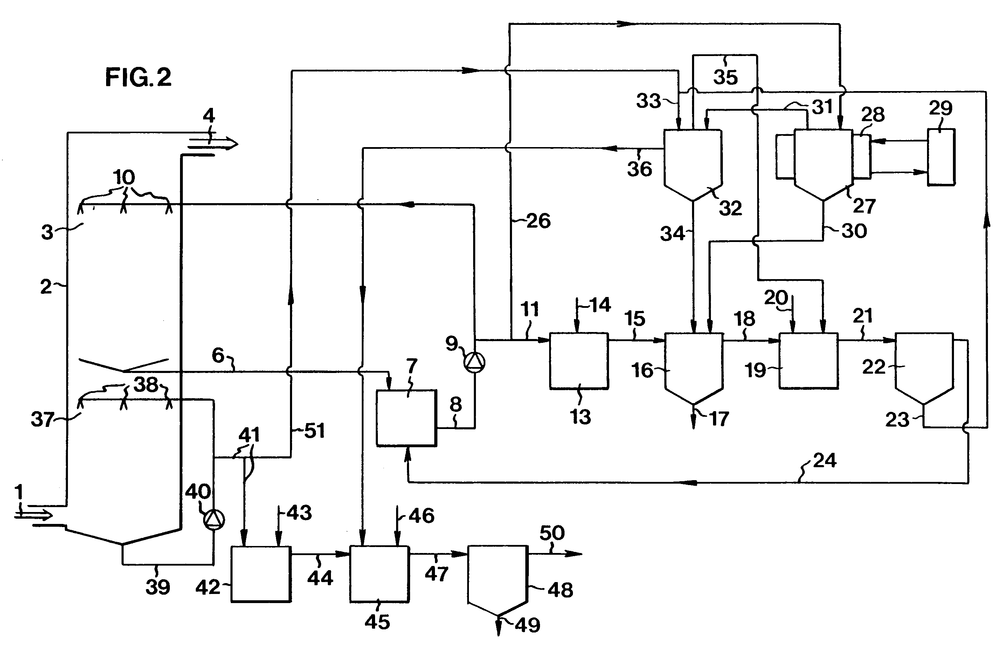

After being treated in the tank 32 for further reduction of the sulphate content to a value below 300 ml sulphate/l, the partial amount of washing liquid is drawn off through a conduit 36 in order to be discharged into the sewage system or, as is preferred, be used for some purpose, as will be described in more detail below with reference to Fig. 2.

Fig. 2 illustrates a preferred embodiment in which the invention is implemented in a plant for two-stage cleaning of gases containing sulphur dioxide as well as hydrogen chloride, e.g. flue gases generated on refuse incineration. In Fig. 2, the second stage of the plant for the absorption of sulphur dioxide corresponds to the apparatus described above with reference to Fig. 1, like components bearing like reference numbers.

As shown in Fig. 2, uncleaned flue gas 1 is introduced into a scrubber 2 where it is treated in two stages with finely-divided washing liquids in order to remove hydrogen chloride and sulphur dioxide, respectively. Then, the cleaned flue gas 4 leaves the scrubber.

Since the second stage in the scrubber for the removal of sulphur dioxide corresponds to the apparatus described above with reference to Fig. 1, reference is made to the foregoing description for more detailed information about this stage.

In order to remove hydrogen chloride, the flue gas 1 is, in the first stage of the scrubber 2, brought into intimate contact with a finely-divided washing liquid 37 injected through nozzles 38. The washing liquid 37 having absorbed hydrogen chloride is collected at the bottom of the scrubber 2, where it is drawn off through a conduit 39 to be recycled to the nozzles 38 by means of a pump 40. From the washing liquid 37 recycled in the conduit 39, a partial flow is drawn off via a conduit 41 for the removal of impurities. To this end, the partial flow is conducted to a tank 42, where the acid liquid is neutralised by an addition of alkali, such as sodium hydroxide and/or calcium hydroxide (slaked lime). Then, the washing liquid is conducted through a conduit 44 to a tank 45, where a sulphide-ion source 46, such as sodium sulphide, is added with a view to precipitating heavy metal impurities, which occurs after the solution has been fed to the precipitation tank 48 via a conduit 47. In the precipitation tank 48, the precipitated heavy metal sulphide sludge is separated and discharged through an outlet 49, whereupon the cleaned liquid leaves through a conduit 50. Depending on whether a sodium compound or a calcium compound is added as alkali 43 in the tank 42, the liquid leaving through the conduit 50 contains sodium chloride or calcium chloride.

As shown in Fig. 2, a partial amount of washing liquid from the acid washing liquid in the first hydrogen-chloride-cleaning stage is drawn off through a branch conduit 51 from the conduit 41. The conduit 51 conducts the partial amount of washing liquid to the cooling circuit, more specifically to the tank 32. The partial amount of washing liquid supplied through the conduit 51 is used for acidifying the liquid in the tank 32, thereby to facilitate the dissolution of the calcium carbonate supplied through the conduit 23 and constituting the calcium-ion source 33. By thus drawing off a partial amount of washing liquid from the conduit 41, the amount to be neutralised in the tank 42 is reduced, so that a smaller amount of alkali 43 has to be added.

The liquid which leaves through the conduit 36, and has been treated in the cooling circuit and chiefly contains sodium chloride and a small amount of sulphate, joins the partial flow of washing liquid drawn off from the first stage through the conduit 41 with a view to the removal of hydrogen chloride. Preferably, the two solutions are brought together in the tank 45. By the supply from the conduit 36, the washing liquid from the first stage is thus supplied with chlorine, sodium and a small amount of sulphate.

As mentioned in the foregoing, the liquid drawn off through the conduit 50 contains chloride ions and, depending on the preceding neutralisation, sodium ions or calcium ions. Owing to the supply from the conduit 36, the liquid further contains a minor amount of sulphate ions, but this amount is so insignificant (below 300 mg/l) that the liquid may be discharged into the sewage system. Alternatively, it is possible to produce sodium chloride (if the neutralisation has involved sodium-based alkali) or hydrochloric acid from the liquid. However, it is then of the utmost importance that the solution does not contain sulphate, or a minimum amount thereof, since difficultly-mastered problems of sulphate coating will otherwise arise in the evaporation. The low sulphate content of the liquid supplied via the conduit 36 is thus a considerable advantage.

Although preferred embodiments of the invention have been described above, it goes without saying that the invention may be modified within the scope of the appended claims, as is appreciated by those skilled in the art.

## Claims

1. A method for cleaning sulphur-dioxide-containing gas (1), such as flue gas, wherein the gas is treated in a gas scrubber (2) for the absorption of sulphur dioxide in an aqueous sodium-based washing liquid (3) circulating in a primary circuit (5) whence a partial flow is drawn off to a secondary circuit (12) to be regenerated by adding a calcium-ion source (14) for the precipitation and removal of calcium sulphate (17) and then adding a carbonate-ion source (20) for the precipitation and removal of calcium carbonate, whereupon the partial flow of regenerated washing liquid is recycled to the primary circuit (5), **characterised** by drawing off from the secondary circuit (12) a partial amount of washing liquid to a cooling circuit (25) where it is brought to a temperature below about 30°C for the precipitation and separation of sodium sulphate, and then adding to the partial amount of washing liquid a calcium-ion source (33) for the precipitation and removal of calcium sulphate, whereupon the partial amount of washing liquid freed of precipitated material is drawn off.

2. A method as set forth in claim 1, **characterised** by adding precipitated calcium carbonate from the secondary circuit (12) as calcium-ion source (33) in the cooling circuit (25).

3. A method as set forth in claim 1 or 2, **characterised** by bringing the partial amount of washing liquid in the cooling circuit (25) to a temperature below about 5°C.

4. A method as set forth in any one of the preceding claims, **characterised** by drawing off the partial amount of washing liquid to the cooling circuit (25) from the partial flow in the secondary circuit (12) before this has been regenerated.

5. A method as set forth in any one of the preceding claims, **characterised** by acidifying, upon the precipitation of calcium sulphate, the partial amount of washing liquid in the cooling circuit (25) by means of an acid washing liquid obtained upon the absorption of hydrogen chloride.

6. A method as set forth in claim 5, **characterised** by conducting the partial amount of washing liquid that has been freed of precipitated material from the cooling circuit (25) to a washing liquid that has been obtained upon the absorption of hydrogen chloride and neutralised.

7. An apparatus for cleaning sulphur-dioxide-containing gas (1), such as flue gas, the apparatus comprising a gas scrubber (2) including at least one stage which comprises a primary circuit (5) having means (9) for circulating an aqueous sodium-based washing liquid (3) in contact with the gas, a conduit (11) for drawing off a partial flow of washing liquid to a secondary circuit (12) which has means for supplying a calcium-ion source (14) and separating precipitated calcium sulphate (17), and means for supplying a carbonate-ion source (20) and separating precipitated calcium carbonate as well as recycling (24) regenerated washing liquid to the primary circuit (5), **characterised** by a conduit (26) from the secondary circuit (12) to a cooling circuit (25) having a cooling means (28, 29) for cooling a partial amount of washing liquid from the secondary circuit (12) and precipitating sodium sulphate, means for separating and recycling (30) precipitated sodium sulphate to the secondary circuit (12), means for supplying a calcium-ion source (33) to the remaining partial amount and precipitating gypsum, means (34) for recycling the precipitated gypsum to the secondary circuit (12), and means (36) for drawing off the partial amount of washing liquid freed of precipitated sodium sulphate and gypsum.

8. An apparatus as set forth in claim 7, **characterised** in that the means for supplying a calcium-ion source to the cooling circuit consists of a conduit (23) for feeding precipitated calcium carbonate from the secondary circuit (12) to the cooling circuit (25).

9. An apparatus as set forth in claim 7 or 8, **characterised** in that the cooling means consists of a heat pump (29).

10. An apparatus as set forth in any one of claims 7-9, **characterised** in that the means for supplying a calcium-ion source (33) to the cooling circuit (25) comprise means for acidification by means of an acid washing liquid obtained from the cleaning of hydrogen-chloride-containing gas, such as flue gas.

## Patentansprüche

1. Verfahren zum Reinigen von Schwefeldioxid enthaltendem Gas (1), beispielsweise Rauchgas, wobei das Gas in einem Gaswascher (2) behandelt wird, und zwar zur Absorption von Schwefeldioxid in einer in einem Primärkreis (5) umlaufenden, wässrigen Waschflüssigkeit (3) auf Natriumbasis, wobei eine Teilströmung für einen Sekundärkreis (12) von dem Primärkreis abgenommen wird, um regeneriert zu werden, und zwar durch Zugabe einer Kalziumionenquelle (14) zum Absetzen und Entfernen von Kalziumsulfat (17) und danach Zugabe einer Karbonationenquelle (20) zum Absetzen und Entfernen von Kalziumkarbonat, wonach die Teilströmung von regenerierter Waschflüssigkeit dem Primärkreis (5) zurückgeführt wird, dadurch **gekennzeichnet**, dass dem Sekundärkreis (12) eine Teilmenge von Waschflüssigkeit für einen Kühlkreis (25) abgenommen wird, wo sie zum Absetzen und Abscheiden von Natriumsulfat auf eine Temperatur unter etwa 30°C gebracht wird, und danach zum Absetzen und Entfernen von Kalziumsulfat eine Kalziumionenquelle (33) der Teilmenge von Waschflüssigkeit zugesetzt wird, wonach die von abgesetztem Material befreite Teilmenge von Waschflüssigkeit abgenommen wird.

2. Verfahren nach Anspruch 1, dadurch **gekennzeichnet,** dass abgeschiedenes Kalziumkarbonat aus dem Sekundärkreis (12) als Kalziumionenquelle (33) im Kühlkreis (25) zugesetzt wird.

3. Verfahren nach Anspruch 1 oder 2, dadurch **gekennzeichnet,** dass die Teilmenge von Waschflüssigkeit im Kühlkreis (25) auf eine Temperatur unter etwa 5°C gebracht wird.

4. Verfahren nach einem der vorhergehenden Ansprüche, dadurch **gekennzeichnet,** dass die Teilmenge von Waschflüssigkeit für den Kühlkreis (25) von der Teilströmung im Sekundärkreis (12) abgenommen wird, bevor diese regeneriert worden ist.

5. Verfahren nach einem der vorhergehenden Ansprüche, dadurch **gekennzeichnet,** dass beim Abscheiden von Kalziumsulfat die Teilmenge von Waschflüssigkeit im Kühlkreis (25) mittels einer bei der Absorption von Chlorwasserstoff erhaltenen, sauren Waschflüssigkeit gesäuert wird.

6. Verfahren nach Anspruch 5, dadurch **gekennzeichnet,** dass die Teilmenge von Waschflüssigkeit, die von abgesetztem Material befreit worden ist, von dem Kühlkreis (25) zu einer Waschflüssigkeit geleitet wird, die bei der Absorption von Chlorwasserstoff erhalten und neutralisiert worden ist.

7. Vorrichtung zum Reinigen von Schwefeldioxid enthaltendem Gas (1), beispielsweise Rauchgas, umfassend einen Gaswascher (2) mit zumindest einer Stufe, die umfasst: einen Primärkreis (5) mit Mitteln (9) zum Umwälzen einer wässrigen Waschflüssigkeit (3) auf Natriumbasis in Berührung mit dem Gas, einer Leitung (11) zum Abnehmen einer Teilströmung von Waschflüssigkeit für einen Sekundärkreis (12), der Mittel zum Zuführen einer Kalziumionenquelle (14) und Abscheiden von abgesetztem Kalziumsulfat (17) aufweist, sowie Mitteln zum Zuführen einer Karbonationenquelle (20) und Abscheiden von abgesetztem Kalziumkarbonat sowie zum Zurückführen (24) von regenerierter Waschflüssigkeit zum Primärkreis (5), **gekennzeichnet** durch eine Leitung (26) von dem Sekundärkreis (12) zu einem Kühlkreis (25) mit einem Kühlmittel (28, 29) zum Kühlen einer Teilmenge von Waschflüssigkeit von dem Sekundärkreis (12) und zum Absetzen von Natriumsulfat, Mittel zum Absetzen und Zurückführen (30) von abgesetztem Natriumsulfat zum Sekundärkreis (12), Mittel zum Zuführen einer Kalziumionenquelle (33) zu der übrigen Teilmenge und zum Absetzen von Gips, Mittel (34) zum Zurückführen des abgesetzten Gipses zum Sekundärkreis (12), und Mittel (36) zum Abnehmen der von abgesetztem Natriumsulfat und Gips befreiten Teilmenge von Waschflüssigkeit.

8. Vorrichtung nach Anspruch 7, dadurch **gekennzeichnet,** dass das Mittel zum Zuführen einer Kalziumionenquelle zum Kühlkreis aus einer Leitung (23) zum Speisen von abgesetztem Kalziumkarbonat vom Sekundärkreis (12) zum Kühlkreis (25) besteht.

9. Vorrichtung nach Anspruch 7 oder 8, dadurch **gekennzeichnet,** dass das Kühlmittel aus einer Wärmepumpe (29) besteht.

10. Vorrichtung nach einem der Ansprüche 7 bis 9, dadurch **gekennzeichnet,** dass die Mittel zum Zuführen einer Kalziumionenquelle (23) zum Kühlkreis (25) Mittel zur Säuerung mittels einer sauren Waschflüssigkeit umfassen, die aus der Reinigung von Chlorwasserstoff enthaltendem Gas, beispielsweise Rauchgas, erhalten ist.

## Revendications

1. Procédé de purification de gaz (1) contenant le dioxyde de sulfure, tel que le gaz de la combustion, dans lequel le gaz est traité dans un laveur de gaz (2) en vue de l'absorption du dioxyde de sulfure dans un liquide laveur aqueux à base de sodium (3) circulant dans un circuit primaire (5), d'où un écoulement partiel est retiré à un circuit secondaire (12) afin d'être régénéré par l'addition d'une source d'ions de calcium (14) en vue de la précipitation et l'enlèvement de sulfate de calcium (17) et par l'addition ultérieure d'une source d'ions de carbonate (20) en vue de la précipitation et l'enlèvement de carbonate de calcium, après quoi l'écoulement partiel de liquide laveur régénéré est recyclé au circuit primaire (5), **caractérisé** par les étapes consistant à retirer à partir du circuit secondaire (12) une quantité partielle de liquide laveur et la conduire à un circuit de refroidissement (25), où le liquide est amené à une température inférieure à environ 30°C en vue de la précipitation et la séparation de sulfate de sodium, et ensuite ajouter à ladite quantité partielle de liquide laveur une source d'ions de calcium (33) en vue de la précipitation et l'enlèvement de sulfate de calcium, après quoi la quantité partielle de liquide laveur sans précipité est retirée.

2. Procédé selon la revendication 1, **caractérisé** par l'étape consistant à ajouter du carbonate de calcium précipité du circuit secondaire (12) en tant que la source d'ions de calcium (33) dans le circuit de refroidissement (25).

3. Procédé selon la revendication 1 ou 2, **caractérisé** par l'étape consistant à amener la quantité partielle de liquide laveur dans le circuit de refroidissement (25) à une température inférieure à environ 5°C.

4. Procédé selon l'une quelconque des revendications précédentes, **caractérisé** par l'étape consistant à retirer la quantité partielle de liquide laveur destinée au circuit de refroidissement (25) à partir de l'écoulement partiel dans le circuit secondaire (12) avant que celui-là n'ait été régénéré.

5. Procédé selon l'une quelconque des revendications précédentes, **caractérisé** par l'étape consistant à acidifier, lors de la précipitation de sulfate de calcium, la quantité partielle de liquide laveur dans le circuit de refroidissement (25) à l'aide d'un liquide laveur acide obtenu lors de l'absorption de chlorure d'hydrogène.

6. Procédé selon la revendication 5, **caractérisé** par l'étape consistant à conduire la quantité partielle de liquide laveur qui a été débarrassée de précipité à partir du circuit de refroidissement (25) jusqu'à un liquide laveur qui a été obtenu lors de l'absorption de chlorure d'hydrogène et a été neutralisé.

7. Une installation de purification de gaz (1) contenant le dioxyde de sulfure, tel que le gaz de combustion, ladite installation comportant un laveur de gaz (2) incluant au moins une étape qui comprend un circuit primaire (5) ayant des moyens (9) conçus pour faire circuler un liquide laveur aqueux à base de sodium (3) en contact avec le gaz, un conduit (11) conçu pour retirer un écoulement partiel de liquide laveur à un circuit secondaire (12) ayant des moyens pour fournir une source d'ions de calcium (14) et séparer le sulfate de calcium précipité (17), et des moyens conçus pour fournir une source d'ions de carbonate (20) et séparer le carbonate de calcium précipité ainsi que recycler (24) le liquide laveur régénéré au circuit primaire (5), **caractérisée** par un conduit (26) s'étendant à partir du circuit secondaire (12) jusqu'à un circuit de refroidissement (25) ayant un moyen de refroidissement (28, 29) conçu pour refroidir une quantité partielle de liquide laveur venant du circuit secondaire (12) et pour précipiter le sulfate de sodium, des moyens conçus pour séparer et recycler (30) le sulfate de sodium précipité au circuit secondaire (12), des moyens conçus pour fournir une source d'ions de calcium (33) à la quantité partielle qui reste et pour précipiter le gypse, des moyens (34) conçus pour recycler le gypse précipité au circuit secondaire (12), et des moyens (36) conçus pour retirer la quantité partielle de liquide laveur débarrassée de sulfate de sodium et de gypse précipités.

8. Installation selon la revendication 7, **caractérisée** en ce que les moyens conçus pour fournir une source d'ions de calcium au circuit de refroidissement sont composés d'un conduit (23) destiné à conduire le carbonate de calcium précipité à partir du circuit secondaire (12) jusqu'au circuit de refroidissement (25).

9. Installation selon la revendication 7 ou 8, **caractérisée** en ce que le moyen de refroidissement est une pompe à chaleur (29).

10. Installation selon l'une quelconque des revendications 7 à 9, **caractérisée** en ce que les moyens conçus pour fournir une source d'ions de calcium (33) au circuit de refroidissement (25) sont composés de moyens destinés à l'acidification à l'aide d'un liquide laveur acide obtenu lors de la purification du gaz contenant le chlorure d'hydrogène, tel que le gaz de la combustion.
